# EUROPÄISCHE PATENTANMELDUNG

(11) **EP 3 893 174 A1**
(43) Veröffentlichungstag der Anmeldung: **13.10.2021**
(21) Anmeldenummer: 21163385.4
(22) Anmeldetag: 18.03.2021
(51) Int. Cl.: G06Q 10/08, G06Q 50/28

(54) **VERFAHREN ZUR STEUERUNG UND ÜBERWACHUNG VON PROZESSTEILNEHMERN EINES INTRALOGISTISCHEN SYSTEMS UND INTRALOGISTISCHES SYSTEM**

(30) Priorität: 08.04.2020 DE 102020109839
(71) Anmelder: STILL GmbH, 22113 Hamburg (DE)
(72) Erfinder: BERGMANN, Ansgar, 22941 Bargteheide (DE)
(74) Vertreter: Patentship Patentanwaltsgesellschaft mbH

(57) **Zusammenfassung**

Die Erfindung betrifft ein Verfahren zur Steuerung und Überwachung von mindestens zwei technischen Prozessteilnehmern (1, 7) eines intralogistischen Systems sowie ein intralogistisches System zur Durchführung des Verfahrens. Es wird vorgeschlagen, dass aktuelle Betriebszustandsinformationen der technischen Prozessteilnehmern (1, 7) an die zentrale, elektronische Steuerungseinheit (2) übermittelt werden, die Betriebszustandsinformationen in der zentralen, elektronischen Steuerungseinheit (2) ausgewertet werden und von der zentralen, elektronischen Steuerungseinheit (2) automatisch auf die aktuellen Betriebszustandsinformationen der technischen Prozessteilnehmer (1, 7) abgestimmte Mitteilungen, insbesondere Steuerungsbefehle und/oder Warnhinweise, an die technischen Prozessteilnehmer (1, 7) übermittelt werden.

## Beschreibung

Die Erfindung betrifft ein Verfahren zur Steuerung und Überwachung von mindestens zwei technischen Prozessteilnehmern eines intralogistischen Systems sowie ein intralogistisches System zur Durchführung des Verfahrens.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen als technische Prozessteilnehmer insbesondere Geräte zur Lager- und Fördertechnik, Hebezeuge, Flurförderzeuge, Kommissioniergeräte, Palettiergeräte, Verpackungsgeräte, Förderbänder, Aufzüge sowie lagerhallenspezifische Einrichtungen (betriebliche Infrastruktur), wie z.B. automatische Tore, Schranken, Regalpositionen und Warneinrichtungen. Solche Geräte und Einrichtungen bilden die technischen Prozessteilnehmer des intralogistischen Systems.

Aufgrund der heutigen Vielzahl von technischen Prozessteilnehmern, insbesondere von Geräten und Einrichtungen, innerhalb eines Betriebsgeländes ist eine Interaktion der technischen Prozessteilnehmer notwendig. Insbesondere ist eine Interaktion zwischen den Flurförderzeugen wie Gabelstaplern, autonomen Transportfahrzeugen, Schleppern etc. mit den Einrichtungen (betriebliche Infrastruktur) wie automatischen Tore, Schranken, Regalpositionen und Warneinrichtungen des intralogistischen Systems notwendig. Damit nicht ständig eine manuelle Betätigung dieser Einrichtungen (betriebliche Infrastruktur) erfolgen muss, ist eine Vielzahl von Sensoren erforderlich, um eine automatische Auslösung beispielsweise von Öffnungs- und Informationsprozessen zu ermöglichen. Diese Sensoren werden über die Einrichtung (betriebliche Infrastruktur) direkt ausgewertet, um eine Interaktion auszuführen. Bei automatischen Interaktionen sind noch zusätzlich diverse Sensoren notwendig, um eine ausreichende Absicherung des Aktionsumfeldes zu garantieren.

Nachteilig bei den üblichen intralogistischen Systemen ist, dass sie eine Vielzahl von unterschiedlichen, spezialisierten Sensoren erfordern. Dabei ist nicht immer der richtige Sensor für jeden Anwendungsfall verfügbar. Insbesondere spezialisierte Sensoren sind außerdem sehr kostenintensiv. Für den Einbau der Sensoriken in die technischen Prozessteilnehmer sind darüber hinaus häufig aufwendige bauliche Maßnahmen erforderlich.

Der vorliegenden Erfindung liegt die Aufgabe zugrunde, ein Verfahren der eingangs genannten Art sowie ein intralogistisches System zur Durchführung des Verfahrens so auszugestalten, dass auf teure Sensoriken weitgehend verzichtet werden kann.

Diese Aufgabe wird verfahrensseitig erfindungsgemäß dadurch gelöst, dass aktuelle Betriebszustandsinformationen der technischen Prozessteilnehmern an die zentrale, elektronische Steuerungseinheit übermittelt werden, die Betriebszustandsinformationen in der zentralen, elektronischen Steuerungseinheit ausgewertet werden und von der zentralen, elektronischen Steuerungseinheit automatisch auf die aktuellen Betriebszustandsinformationen der technischen Prozessteilnehmer abgestimmte Mitteilungen, insbesondere Steuerungsbefehle und/oder Warnhinweise, an die technischen Prozessteilnehmer übermittelt werden.

Vorteilhafterweise kommunizieren die technischen Prozessteilnehmer jeweils über mindestens einen bidirektionalen Kommunikationsweg mit einer zentralen, elektronischen Steuerungseinheit.

Der Grundgedanke der Erfindung besteht also darin, dass die Steuerung der betrieblichen Infrastruktur und die Überwachung aller Abläufe mit einer übergeordneten, elektronischen Steuerungseinheit erfolgen. Hierzu sind beispielsweise die technischen Prozessteilnehmer mit Kommunikationseinrichtungen versehen, mittels derer die Betriebszustandsinformationen der technischen Prozessteilnehmer an die übergeordnete Steuerungseinheit übermittelt werden können. In der übergeordneten Steuerungseinheit werden diese Betriebszustandsinformationen der technischen Prozessteilnehmer ausgewertet, so dass eine zielgenaue, situationsabhängige Steuerung und Überwachung aller Abläufe ermöglicht wird. Auf eine zusätzliche Sensorik zur Steuerung der betrieblichen Infrastruktur kann somit verzichtet werden.

Dabei wird bevorzugt als mindestens einer der technischen Prozessteilnehmer ein bewegungsaktiver, technischer Prozessteilnehmer, insbesondere ein Flurförderzeug, verwendet.

Als mindestens einer der technischen Prozessteilnehmer kann auch ein ortsfestes, technisches Infrastrukturelement (betriebliche Infrastruktur) verwendet werden.

Besonders bevorzugt werden gleichzeitig sowohl mindestens ein bewegungsaktiver, technischer Prozessteilnehmer, insbesondere ein Flurförderzeug, als auch mindestens ein ortsfestes, technisches Infrastrukturelement verwendet. Somit können Interaktionen zwischen dem bewegungsaktiven, technischen Prozessteilnehmer und dem ortsfesten, technischen Infrastrukturelement mittels der zentralen elektronischen Steuerungseinheit gesteuert und überwacht werden. Insbesondere kann auf diese Weise ein Flurförderzeug mit einem Infrastrukturelement, zum Beispiel einem steuerbaren Tor, interagieren, ohne dass zusätzliche Sensoren notwendig sind.

Dabei wird die bidirektionale Kommunikation zweckmäßigerweise über einen drahtlosen Datenaustausch zwischen Datensende- und Datenempfangseinheiten der technischen Prozessteilnehmer und der zentralen, elektronischen Steuerungseinheit durchgeführt. Hierzu kann zum Beispiel eine Funkverbindung eingesetzt werden.

Als Betriebszustandsinformationen werden vorzugsweise Positionsdaten und/oder Bewegungsdaten und/oder Aktivitätsdaten und/oder System-Zustandsdaten der technischen Prozessteilnehmer übermittelt. So kann insbesondere ein mit einer Ortungsfunktion, beispielsweise einer Ortungsausrüstung, und einer Kommunikationsfunktion, beispielsweise einer Funkeinheit, ausgestattetes Flurförderzeug seine Position, seinen Status und weitere beschreibende Informationen an die zentrale, elektronische Steuerungseinheit übermitteln. Ein zu steuerndes Infrastrukturelement, beispielsweise ein Tor, verfügt ebenfalls über eine Kommunikationsfunktion, beispielsweise über eine Funkeinheit, und kann seinerseits seinen Status, insbesondere den Öffnungszustand, an die zentrale, elektronische Steuerungseinheit übermitteln. Nach Auswertung der übermittelten Informationen kann die Steuerungseinheit somit das Flurförderzeug und/oder das Infrastrukturelement steuern und überwachen. Die Betriebszustandsinformationen, insbesondere die Positionsdaten und/oder Bewegungsdaten, können hierbei direkt von dem Flurförderzeug an die zentrale, elektronische Steuerungseinheit übermittelt werden oder alternativ indirekt von einem weiteren technischen Prozessteilnehmer, beispielsweise einem Ortungssystem außerhalb des Flurförderzeugs, das die Betriebszustandsinformationen, insbesondere die Positionsdaten und/oder Bewegungsdaten des Flurförderzeugs, generiert, an die zentrale, elektronische Steuerungseinheit übermittelt werden.

Gemäß einer besonders bevorzugten Ausgestaltung der Erfindung werden in der zentralen, elektronischen Steuerungseinheit aus den übermittelten Betriebszustandsinformationen der technischen Prozessteilnehmer digitale Abbilder der technischen Prozessteilnehmer errechnet.

Dabei kann als zentrale, elektronische Steuerungseinheit eine singuläre, physikalische Einheit, insbesondere ein Computer, verwendet werden.

Gemäß einer Weiterbildung des Erfindungsgedankens wird als zentrale, elektronische Steuerungseinheit ein externes oder internes Rechnernetzwerk, insbesondere eine Cloud, verwendet. Die Verwendung einer Cloud als externe oder interne Speicher- und Recheneinheit ist allgemein bei Internet-Anwendungen weit verbreitet.

Zweckmäßigerweise wird die Kommunikation zwischen den technischen Prozessteilnehmern und der zentralen, elektronischen Steuerungseinheit zyklisch und möglichst mit geringer Latenz durchgeführt.

Mit besonderem Vorteil ist die zentrale, elektronische Steuerungseinheit dafür ausgebildet, eine Interaktion zwischen den technischen Prozessteilnehmern zu steuern und zu überwachen.

Ein besonders gut geeigneter Anwendungsfall besteht dabei darin, dass eine Interaktion zwischen mindestens einem als Flurförderzeug ausgebildeten, technischen Prozessteilnehmer und mindestens einer als steuerbare Barriere, insbesondere als Tor oder Schranke, ausgebildeten, technischen Prozessteilnehmer gesteuert und überwacht wird.

Hierzu ist vorzugsweise vorgesehen, dass die aktuellen Betriebszustandsinformationen des Flurförderzeugs, insbesondere Positions- und/oder Bewegungsdaten sowie Abmessungsdaten, an die zentrale, elektronische Steuerungseinheit übermittelt werden. Außerdem werden von der Barriere die aktuellen Betriebszustandsinformationen, insbesondere Öffnungszustandsdaten und Abmessungsdaten der Barriere, an die zentrale, elektronische Steuerungseinheit übermittelt. Die Betriebszustandsinformationen des Flurförderzeugs und der Barriere werden in der zentralen, elektronischen Steuerungseinheit ausgewertet. Bei Erkennung einer Annäherung des Flurförderzeugs an die Barriere und einer Passiermöglichkeit wird ein Steuerungsbefehl zur Öffnung der Barriere von der zentralen, elektronischen Steuerungseinheit an die Barriere übermittelt. Bei Erkennung einer Kollisionsgefahr wird ein Warnhinweis und/oder ein Steuerungsbefehl zum Anhalten oder Ausweichen von der zentralen, elektronischen Steuerungseinheit an das Flurförderzeug übermittelt.

Ein weiterer vorteilhafter Anwendungsfall besteht darin, dass eine Interaktion zwischen mindestens einem als Flurförderzeug ausgebildeten, technischen Prozessteilnehmer und mindestens einer als zu beladenden oder zu entladenden Transporteinheit, insbesondere als Lastkraftwagen oder Güterwagon oder Förderband oder Aufzug, ausgebildeten, technischen Prozessteilnehmer gesteuert und überwacht wird.

Hierzu ist vorzugsweise vorgesehen, dass die aktuellen Betriebszustandsinformationen des Flurförderzeugs, insbesondere Positions- und/oder Bewegungsdaten, an die zentrale, elektronische Steuerungseinheit übermittelt werden. Außerdem werden von der Transporteinheit die aktuellen Betriebszustandsinformationen, insbesondere Positions- und/oder Bewegungsdaten, an die zentrale, elektronische Steuerungseinheit übermittelt. Die Betriebszustandsinformationen des Flurförderzeugs und der Transporteinheit werden in der zentralen, elektronischen Steuerungseinheit ausgewertet. Bei Erkennung einer Annäherung des Flurförderzeugs an die Transporteinheit werden Hinweise und/oder Steuerungsbefehle zum Einleiten des Belade- oder Entladevorgangs von der zentralen, elektronischen Steuerungseinheit an das Flurförderzeug und die Transporteinheit übermittelt. Bei Erkennung einer Entfernung des Flurförderzeugs von der Transporteinheit werden Warnhinweise und/oder Steuerungsbefehle zum Beenden des Belade- oder Entladevorgangs von der zentralen, elektronischen Steuerungseinheit an das Flurförderzeug und die Transporteinheit übermittelt.

Die Erfindung betrifft ferner ein intralogistisches System mit mindestens zwei technischen Prozessteilnehmern zur Durchführung des Verfahrens.

Bei dem intralogistischen System wird die gestellte Aufgabe dadurch gelöst, dass eine zentrale, elektronische Steuerungseinrichtung vorgesehen ist, und die technischen Prozessteilnehmer sowie die zentrale, elektronische Steuerungseinrichtung jeweils über mindestens eine Kommunikationseinrichtung, insbesondere eine drahtlose Datensende- und Datenempfangseinrichtung, verfügen, die eine bidirektionale Kommunikation zwischen der zentralen, elektronischen Steuerungseinrichtung und den technischen Prozessteilnehmern ermöglicht, und die technischen Prozessteilnehmer jeweils über mindestens eine, mit der Kommunikationseinrichtung in Wirkverbindung stehende, Informations-Erfassungseinrichtung zur Erfassung von aktuellen Betriebszustandsinformationen der technischen Prozessteilnehmer verfügen, und die Kommunikationseinrichtungen der technischen Prozessteilnehmer dazu eingerichtet sind, die aktuellen Betriebszustandsinformationen automatisch oder auf Anforderung an die zentrale, elektronische Steuerungseinheit zu übermitteln, und die zentrale, elektronische Steuerungseinrichtung dazu eingerichtet ist, die Betriebszustandsinformationen auszuwerten und automatisch auf die aktuellen Betriebszustandsinformationen der technischen Prozessteilnehmer abgestimmte Mitteilungen, insbesondere Steuerungsbefehle und/oder Warnhinweise, an die technischen Prozessteilnehmer zu übermitteln.

Dabei ist vorzugsweise mindestens ein technischer Prozessteilnehmer als Flurförderzeug ausgebildet, wobei die Informations-Erfassungseinrichtung zur Erfassung von aktuellen Betriebszustandsinformationen mindestens eine Ortungseinrichtung umfasst, mit der die Position des Flurförderzeugs erfasst wird.

Von Vorteil ist auch, dass mindestens ein technischer Prozessteilnehmer als ortsfestes, technisches Infrastrukturelement (betriebliche Infrastruktur), insbesondere als Tor oder Schranke, ausgebildet ist.

Eine Weiterbildung des Erfindungsgedankens sieht vor, dass mindestens ein technischer Prozessteilnehmer als Transporteinheit, insbesondere als Lastkraftwagen oder Güterwagon oder Förderband oder Aufzug, ausgebildet ist. Somit kann das Be- und Entladen der Transporteinheit durch die zentrale, elektronische Steuerungseinheit gesteuert und überwacht werden. Beispielsweise kann ein von einer Laderampe wegfahrender Lastkraftwagen automatisch eine entsprechende Information an die Steuerungseinheit übermitteln, so dass diese einen Beladevorgang bzw. Entladevorgang des Lastkraftwagens durch ein Flurförderzeugs stoppen kann, um zu verhindern, dass das Flurförderzeug in einen Spalt zwischen der Laderampe und der Ladefläche des Lastkraftwagens gerät. Weiterhin kann beispielsweise für die Ladungsaufnahme bzw. -abgabe an einem Aufzug, der Aufzug von der Steuerungseinheit an eine Übergabeposition geholt werden, wenn das Flurförderzug sich dem Aufzug nähert. Weiterhin kann beispielsweise für die Ladungsaufnahme bzw. -abgabe an einem Förderband, die Ladung von der Steuerungseinheit an die Übergabeposition gefördert bzw. von der Übergabeposition weggefördert werden, wenn das Flurförderzug die Ladung vom Förderband aufnehmen soll bzw. die Ladung auf dem Förderband abgesetzt hat.

Vorzugsweise ist die zentrale, elektronische Steuerungseinrichtung als singuläre, physikalische Einheit, insbesondere als Computer, ausgebildet.

In einer besonders vorteilhaften Ausgestaltung der Erfindung ist die zentrale, elektronische Steuerungseinrichtung als externes oder internes Rechnernetzwerk, insbesondere als Cloud, ausgebildet.

Dabei ist die zentrale, elektronische Steuerungseinrichtung gemäß einer weiteren bevorzugten Ausgestaltung dazu eingerichtet, aus den Betriebszustandsinformationen digitale Abbilder der technischen Prozessteilnehmer zu errechnen.

Die Erfindung bietet wesentliche Vorteile gegenüber dem Stand der Technik:
In der Regel sind moderne Betriebsgelände schon mit einer Lokalisierung ausgestattet. Durch die erfindungsgemäße, virtuelle Steuerung entfallen alle bisher notwendigen Sensoren an den zu steuernden technischen Prozessteilnehmern, insbesondere der betrieblichen Infrastruktur. Maßnahmen können anhand der vorliegenden Informationen von der zentralen elektronischen Steuereinheit früher oder zielgerichteter durchgeführt werden. Ein Flurförderzeug mit angehobenem Mast kann zum Beispiel von der zentralen elektronischen Steuereinheit vor der Durchfahrt durch ein Tor auf diesen Umstand hingewiesen werden, so dass es zu einer Kollisionsvermeidung mit dem Tor kommt.

Außerdem können alle Vorgänge protokolliert und dem Betreiber zwecks Prozessoptimierung zur Verfügung gestellt werden. Beispielsweise können die Informationen in einem Flotten- und Betriebsmanagementsystem verwaltet werden.

Weitere Vorteile und Einzelheiten der Erfindung werden anhand des in der schematischen Figur dargestellten Ausführungsbeispiels näher erläutert. Hierbei zeigt die
- Figur: eine Darstellung eines Systems zur automatischen Toröffnung.

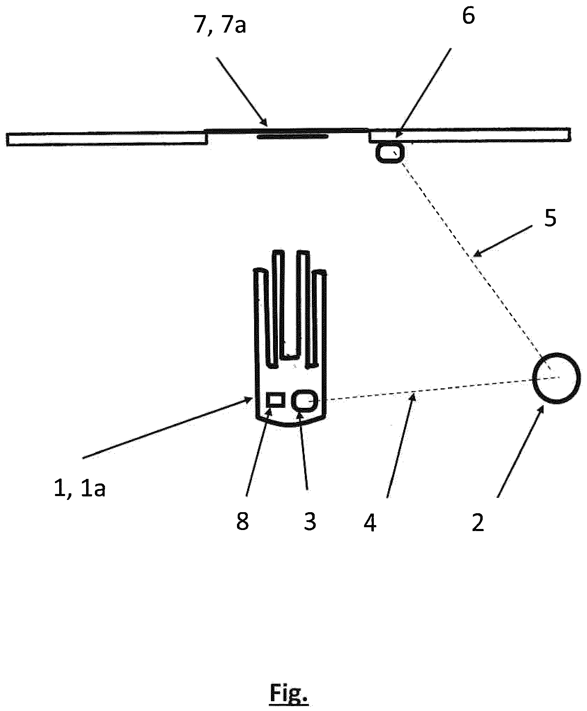

Das in der Figur dargestellte Ausführungsbeispiel der Erfindung bezieht sich auf die sichere Interaktion zwischen den technischen Prozessteilnehmern 1 und 7 ohne zusätzliche Sensorik.

Hierzu erfolgt die komplette Steuerung und Überwachung aller Abläufe erfindungsgemäß auf der als Computer bzw. Cloud ausgebildeten zentralen, elektronischen Steuerungseinheit 2 unter Nutzung von digitalen Abbildern der interagierenden technischen Prozessteilnehmer 1, 7. Bei den technischen Prozessteilnehmern 1, 7 handelt es sich einerseits um ein Flurförderzeug 1a und andererseits um ein als steuerbare Barriere 7a ausgebildetes Tor 7a.

Das Flurförderzeug 1a ist mit einer beispielsweise als Funkeinrichtung ausgebildeten Kommunikationseinheit 3 und einer Ortungsausrüstung 8 ausgestattet. Mittels der Kommunikationseinheit 3 übermittelt das Flurförderzeug 1a über einen drahtlosen, bidirektionalen Kommunikationsweg 4 seine Position, seinen Status, beispielsweise Hubmast angehoben oder abgesenkt, und weitere beschreibende Informationen, beispielsweise die Abmessungen des Flurförderzeugs 1a, an die Steuerungseinheit 2. Über den Kommunikationsweg 4 kann die Steuerungseinheit 2 Steuerungsbefehle und/oder Warnhinweise an das Flurförderzeug 1a senden.

Das Tor 7a ist ebenfalls mittels einer beispielsweise als Funkeinrichtung ausgebildeten Kommunikationseinheit 6 über einen drahtlosen, bidirektionalen Kommunikationsweg 5 mit der Steuerungseinheit 2 verbunden. Mittels der Kommunikationseinheit 6 übermittelt das Tor 7a über den drahtlosen, bidirektionalen Kommunikationsweg 5 seinen Status, beispielsweise den Status offen bzw. zu, und weitere beschreibende Informationen, beispielsweise die Abmessungen des Tors 7a, an die Steuerungseinheit 2. Über den Kommunikationsweg 5 kann die Steuerungseinheit 2 Steuerungsbefehle an das Tor 7a senden, um das Tor 7a zu öffnen oder zu schließen.

In der Steuerungseinheit 2 werden aus den übermittelten Informationen digitale Abbilder des Flurförderzeugs 1a und des Tors 7a errechnet. Die Steuerungseinheit 2 kann als singuläre physikalische Einheit ausgestaltet sein. Ebenso sind alle notwendigen Berechnungen auch in einer Cloud (auch physikalischer Edge Cloud) durchführbar. Die Kommunikation zwischen dem Flurförderzeug 1a und der Steuerungseinheit 2 über den Kommunikationsweg 4 sowie zwischen dem Tor 7a und der Steuerungseinheit 2 über den Kommunikationsweg 5 erfolgt zyklisch und mit geringer Latenz.

Durch die Positionsbestimmung des Flurförderzeugs 1a, die die Steuerungseinheit 2 über den Kommunikationsweg 4 erhält, wird dem Tor 7a durch die Steuerungseinheit 2 über den Kommunikationsweg 5 mitgeteilt, ob eine Öffnung des Tors 7a notwendig ist, da das Fahrzeug 1a das Tor 7a passieren möchte. Hierfür werden Geschwindigkeit, Lenkwinkel und Ausgangsposition des Flurförderzeugs 1a verwendet, die der Steuerungseinheit 2 über den Kommunikationsweg 4 vom Flurförderzeug 1a übermittelt werden, und von der Steuerungseinheit 2 ausgewertet. Dadurch dass der Steuerungseinheit 2 die digitalen Abbilder des Flurförderzeugs 1a und des Tors 7a vorliegen, sind folgende sicheren Aktionen möglich:
1. Das Tor 7a wird aufgrund der Annäherung des Flurförderzeugs 1a, welche die Steuerungseinheit 2 über den Kommunikationsweg 4 vom Flurförderzeug 1a erhält, durch einen über den Kommunikationsweg 5 der Steuerungseinheit 2 übermittelten Steuerungsbefehl der Steuerungseinheit 2 geöffnet, es sind hierfür keine weiteren Sensoren notwendig. Das Tor 2a kann über den Kommunikationsweg 5 seine Zustandsdaten, beispielsweise den Zustand offen, an die Steuerungseinheit 2 übermitteln.
2. Das Flurförderzeug 1a wird von der Steuerungseinheit 2 über den Kommunikationsweg 4 über den über den Kommunikationsweg 5 übermittelten Zustand des Tors 7a informiert, beispielsweise ob das Tor 7a geöffnet ist, und ob das Flurförderzeug 1a das geöffnete Tor 7a gefahrlos passieren kann. Ist dies nicht der Fall, kann die Steuerungseinheit 2 über einen über den Kommunikationsweg 4 übermittelten Warnhinweis das Flurförderzeug 1a informieren und über einen über den Kommunikationsweg 4 übermittelten Steuerungsbefehl das Flurförderzeug 1a abbremsen.
3. Die Steuerungseinheit 2 überprüft den über den Kommunikationsweg 4 übermittelten Zustand des Flurförderzeugs 1a, beispielsweise Hubmast angehoben oder abgesenkt und/oder Abmessungen des Flurförderzeugs 1a, und gleicht diesen mit dem Abbild des Tores 7a ab. Übersteigt beispielsweise die Dimension des Flurförderzeugs 1a, beispielsweise wegen eines angehobenen Hubmastes oder zu großer Fahrzeugbreite, die Maße des geöffneten Tores 7a, wird das Flurförderzeug 1a von der Steuerungseinheit 2 über einen mittels des Kommunikationsweges 4 übermittelten Warnhinweises vor der Durchfahrt des Tors 7a gewarnt. Dabei kann eine Meldung an den Fahrer des Flurförderzeugs 1a erfolgen oder im Falle eines autonomen Flurförderzeugs 1a an das autonome System des Flurförderzeugs 1a erfolgen. Gegebenenfalls wird das Flurförderzeug 1a von der Steuerungseinheit 2 über einen mittels des Kommunikationsweges 4 übermittelten Steuerungsbefehl gestoppt, um eine Beschädigung am Tor 7a zu verhindern.
4. Befinden sich bei geschlossenem Tor 7a auf beiden Seiten Flurförderzeuge 1a, werden diese über die Steuerungseinheit 2 informiert, um eine mögliche Kollision zu vermeiden.

Für die beschriebene Interaktion des Flurförderzeugs 1a mit dem Tor 7a ist lediglich an dem Flurförderzeug 1a eine Ortungsausrüstung 8 erforderlich und es sind die entsprechenden Zustandsdaten (Statusdaten) der interagierenden Prozessteilnehmer Flurförderzeug 1a und Tor 7a erforderlich, beispielsweise Tor 7a offen bzw. geschlossen, Hubmast des Flurförderzeugs 1a angehoben bzw. abgesenkt.

In entsprechender Weise können durch die Steuerungseinheit 2 auch Schranken geöffnet bzw. geschlossen werden, Signaleinrichtungen betätigt werden, Fahreigenschaften von beteiligten Fahrzeugen, beispielswiese Geschwindigkeitsveränderung oder Stillstand, verändert werden und Warnungen versendet werden.

Die Erfindung ist nicht auf das dargestellte Ausführungsbeispiel beschränkt, bei dem die Ortungsausrüstung 8 Bestandteil des Flurförderzeugs 1 ist. Alternativ kann die Ortungsausrüstung 8 getrennt von dem Flurförderzeug 1 und somit extern vom Flurförderzeug 1 vorgesehen sein. Die externe Ortungsausrüstung 8, die die Position des Flurförderzeugs 1a bestimmt, steht dann über einen weiteren Kommunikationsweg mit der Steuerungseinheit 2 in Verbindung, um die Positionsdaten und/oder Bewegungsdaten des Flurförderzeugs 1 an die Steuerungseinheit 2 zu übermitteln.

## Patentansprüche

1. Verfahren zur Steuerung und Überwachung von mindestens zwei technischen Prozessteilnehmern (1, 7) eines intralogistischen Systems, **dadurch gekennzeichnet, dass** aktuelle Betriebszustandsinformationen der technischen Prozessteilnehmern (1, 7) an die zentrale, elektronische Steuerungseinheit (2) übermittelt werden, die Betriebszustandsinformationen in der zentralen, elektronischen Steuerungseinheit (2) ausgewertet werden und von der zentralen, elektronischen Steuerungseinheit (2) automatisch auf die aktuellen Betriebszustandsinformationen der technischen Prozessteilnehmer (1, 7) abgestimmte Mitteilungen, insbesondere Steuerungsbefehle und/oder Warnhinweise, an die technischen Prozessteilnehmer (1, 7) übermittelt werden.

2. Verfahren nach Anspruch 1, **dadurch gekennzeichnet, dass** die technischen Prozessteilnehmer (1, 7) über mindestens einen bidirektionalen Kommunikationsweg (4, 5) mit der zentralen, elektronischen Steuerungseinheit (2) kommunizieren.

3. Verfahren nach Anspruch 1 oder 2, **dadurch gekennzeichnet, dass** als mindestens einer der technischen Prozessteilnehmer (1, 7) ein bewegungsaktiver, technischer Prozessteilnehmer (1, 7), insbesondere ein Flurförderzeug (1a), verwendet wird.

4. Verfahren nach einem der Ansprüche 1 bis 3, **dadurch gekennzeichnet, dass** als mindestens einer der technischen Prozessteilnehmer (1, 7) ein ortsfestes, technisches Infrastrukturelement (7a) verwendet wird.

5. Verfahren nach einem der Ansprüche 2 bis 4, **dadurch gekennzeichnet, dass** die bidirektionale Kommunikation über einen drahtlosen Datenaustausch zwischen Datensende- und Datenempfangseinheiten der technischen Prozessteilnehmer (1, 7) und der zentralen, elektronischen Steuerungseinheit (2) durchgeführt wird.

6. Verfahren nach einem der Ansprüche 1 bis 5, **dadurch gekennzeichnet, dass** als Betriebszustandsinformationen Positionsdaten und/oder Bewegungsdaten und/oder Aktivitätsdaten und/oder System-Zustandsdaten der technischen Prozessteilnehmer (1, 7) übermittelt werden.

7. Verfahren nach einem der Ansprüche 1 bis 6, **dadurch gekennzeichnet, dass** in der zentralen, elektronischen Steuerungseinheit (2) aus den übermittelten Betriebszustandsinformationen der technischen Prozessteilnehmer (1, 7) digitale Abbilder der technischen Prozessteilnehmer (1, 7) errechnet werden.

8. Verfahren nach einem der Ansprüche 1 bis 7, **dadurch gekennzeichnet, dass** als zentrale, elektronische Steuerungseinheit (2) eine singuläre, physikalische Einheit, insbesondere ein Computer, verwendet wird.

9. Verfahren nach einem der Ansprüche 1 bis 7, **dadurch gekennzeichnet, dass** als zentrale, elektronische Steuerungseinheit (2) ein externes oder internes Rechnernetzwerk, insbesondere eine Cloud, verwendet wird.

10. Verfahren nach einem der Ansprüche 1 bis 9, **dadurch gekennzeichnet, dass** die Kommunikation zwischen den technischen Prozessteilnehmern (1, 7) und der zentralen, elektronischen Steuerungseinheit (2) zyklisch durchgeführt wird.

11. Verfahren nach einem der Ansprüche 1 bis 10, **dadurch gekennzeichnet, dass** die zentrale, elektronische Steuerungseinheit (2) eine Interaktion zwischen den technischen Prozessteilnehmern (1, 7) steuert und überwacht.

12. Verfahren nach Anspruch 11, **dadurch gekennzeichnet, dass** eine Interaktion zwischen mindestens einem als Flurförderzeug (1a) ausgebildeten, technischen Prozessteilnehmer (1,7) und mindestens einer als steuerbare Barriere (7a), insbesondere als Tor (7a) oder Schranke, ausgebildeten, technischen Prozessteilnehmer (1, 7) gesteuert und überwacht wird.

13. Verfahren nach Anspruch 12, **dadurch gekennzeichnet, dass** die aktuellen Betriebszustandsinformationen des Flurförderzeugs (1a), insbesondere Positions- und/oder Bewegungsdaten sowie Abmessungsdaten, an die zentrale, elektronische Steuerungseinheit (2) übermittelt werden, und von der Barriere (7a) die aktuellen Betriebszustandsinformationen, insbesondere Öffnungszustandsdaten und Abmessungsdaten der Barriere (7a), an die zentrale, elektronische Steuerungseinheit (2) übermittelt werden, die Betriebszustandsinformationen des Flurförderzeugs (1a) und der Barriere (7a) in der zentralen, elektronischen Steuerungseinheit (2) ausgewertet werden, und bei Erkennung einer Annäherung des Flurförderzeugs (1a) an die Barriere (7a) und einer Passiermöglichkeit ein Steuerungsbefehl zur Öffnung der Barriere (7a) von der zentralen, elektronischen Steuerungseinheit (2) an die Barriere (7a) übermittelt wird und bei Erkennung einer Kollisionsgefahr ein Warnhinweis und/oder Steuerungsbefehle zum Anhalten oder Ausweichen von der zentralen, elektronischen Steuerungseinheit (2) an das Flurförderzeug (1a) übermittelt wird.

14. Verfahren nach Anspruch 11, **dadurch gekennzeichnet, dass** eine Interaktion zwischen mindestens einem als Flurförderzeug (1a) ausgebildeten, technischen Prozessteilnehmer (1, 7) und mindestens einer als zu beladenden oder zu entladenden Transporteinheit, insbesondere als Lastkraftwagen oder Güterwagon oder Förderband oder Aufzug, ausgebildeten, technischen Prozessteilnehmer (1, 7) gesteuert und überwacht wird.

15. Verfahren nach Anspruch 14, **dadurch gekennzeichnet, dass** die aktuellen Betriebszustandsinformationen des Flurförderzeugs (1a), insbesondere Positions- und/oder Bewegungsdaten, an die zentrale, elektronische Steuerungseinheit (2) übermittelt werden, und von der Transporteinheit die aktuellen Betriebszustandsinformationen, insbesondere Positions- und/oder Bewegungsdaten, an die zentrale, elektronische Steuerungseinheit (2) übermittelt werden, die Betriebszustandsinformationen des Flurförderzeugs (1a) und der Transporteinheit in der zentralen, elektronischen Steuerungseinheit (2) ausgewertet werden, und bei Erkennung einer Annäherung des Flurförderzeugs (1a) an die Transporteinheit Hinweise und/oder Steuerungsbefehle zum Einleiten des Belade- oder Entladevorgangs von der zentralen, elektronischen Steuerungseinheit (2) an das Flurförderzeug (1a) und die Transporteinheit übermittelt werden und bei Erkennung einer Entfernung des Flurförderzeugs (1a) von der Transporteinheit Warnhinweise und/oder ein Steuerungsbefehle zum Beenden des Belade- oder Entladevorgangs von der zentralen, elektronischen Steuerungseinheit (2) an das Flurförderzeug (1a) und die Transporteinheit übermittelt werden.

16. Intralogistisches System mit mindestens zwei technischen Prozessteilnehmern (1, 7) zur Durchführung des Verfahrens nach einem der Ansprüche 1 bis 15, **dadurch gekennzeichnet, dass** eine zentrale, elektronische Steuerungseinrichtung (2) vorgesehen ist und die technischen Prozessteilnehmer (1, 7) sowie die zentrale, elektronische Steuerungseinrichtung (2) jeweils über mindestens eine Kommunikationseinrichtung (3, 6), insbesondere eine drahtlose Datensende- und Datenempfangseinrichtung, verfügen, die eine bidirektionale Kommunikation zwischen der zentralen, elektronischen Steuerungseinrichtung (2) und den technischen Prozessteilnehmern (1, 7) ermöglicht, und die technischen Prozessteilnehmer (1, 7) jeweils über mindestens eine, mit der Kommunikationseinrichtung (3, 6) in Wirkverbindung stehende, Informations-Erfassungseinrichtung zur Erfassung von aktuellen Betriebszustandsinformationen der technischen Prozessteilnehmer (1, 7) verfügen, und die Kommunikationseinrichtungen (3, 6) der technischen Prozessteilnehmer (1, 7) dazu eingerichtet sind, die aktuellen Betriebszustandsinformationen automatisch oder auf Anforderung an die zentrale, elektronische Steuerungseinheit (2) zu übermitteln, und die zentrale, elektronische Steuerungseinrichtung (2) dazu eingerichtet ist, die Betriebszustandsinformationen auszuwerten und automatisch auf die aktuellen Betriebszustandsinformationen der technischen Prozessteilnehmer (1, 7) abgestimmte Mitteilungen, insbesondere Steuerungsbefehle und/oder Warnhinweise, an die technischen Prozessteilnehmer (1, 7) zu übermitteln.

17. Intralogistisches System nach Anspruch 16, **dadurch gekennzeichnet, dass** mindestens ein technischer Prozessteilnehmer (1, 7) als Flurförderzeug (1a) ausgebildet ist, wobei die Informations-Erfassungseinrichtung zur Erfassung von aktuellen Betriebszustandsinformationen mindestens eine Ortungseinrichtung (8) umfasst.

18. Intralogistisches System nach Anspruch 16 oder 17, **dadurch gekennzeichnet, dass** mindestens ein technischer Prozessteilnehmer (1, 7) als ortsfestes, technisches Infrastrukturelement, insbesondere als Tor (7a) oder Schranke, ausgebildet ist.

19. Intralogistisches System nach einem der Ansprüche 16 bis 18, **dadurch gekennzeichnet, dass** mindestens ein technischer Prozessteilnehmer (1, 7) als Transporteinheit, insbesondere als Lastkraftwagen oder Güterwagon oder Förderband oder Aufzug, ausgebildet ist.

20. Intralogistisches System nach einem der Ansprüche 16 bis 19, **dadurch gekennzeichnet, dass** die zentrale, elektronische Steuerungseinrichtung (2) als singuläre, physikalische Einheit, insbesondere als Computer, ausgebildet ist.

21. Intralogistisches System nach einem der Ansprüche 16 bis 19, **dadurch gekennzeichnet, dass** die zentrale, elektronische Steuerungseinrichtung (2) als externes oder internes Rechnernetzwerk, insbesondere als Cloud, ausgebildet ist.

22. Intralogistisches System nach einem der Ansprüche 16 bis 21, **dadurch gekennzeichnet, dass** die zentrale, elektronische Steuerungseinrichtung (2) dazu eingerichtet ist, aus den Betriebszustandsinformationen digitale Abbilder der technischen Prozessteilnehmer (1, 7) zu errechnen.
